# EUROPEAN PATENT SPECIFICATION

(11) **EP 0 893 747 B1**
(45) Date of publication and mention of the grant of the patent: **13.06.2001**
(21) Application number: 98113806.8
(22) Date of filing: 23.07.1998
(51) Int. Cl.: G05B 19/042

(54) **A monitoring device for a grinding machine**
Überwachungseinrichtung für Schleifmaschine
Dispositif de surveillance pour ponceuse

(30) Priority: 25.07.1997 IT TO970668
(43) Date of publication of application: 27.01.1999
(73) Proprietor: TACCHELLA MACCHINE S.p.A., I-15011 Acqui Terme (IT)
(72) Inventor: Tacchella, Claudio, 15011 Acqui Terme (IT)
(74) Representative: Franzolin, Luigi

(56) References cited:
- US-A- 5 175 688
- US-A- 5 608 641

## Description

The present invention relates to a device for monitoring a grinding machine.

Grinding machines are known, e.g. grinding machines in which a supporting structure carries at least one rectilinear guide along which a carriage can move and holds a grinding disc movable through an angle under the action of driving means and radially movable in a direction X at an angle to the direction Z in which the carriage moves along the guide. The supporting structure also carries a device for retaining a substantially axially symmetrical part disposed parallel to the rectilinear guide and to be subjected to a grinding process. The retaining device is adapted to carry opposite ends of the part, disposing the part with its axis parallel to the direction Z and at an angle to the direction X. The supporting device is also adapted to rotate the part through an angle.

Known grinding machines are normally monitored by an electronic control and monitoring unit which is adapted to monitor movements of the grinding disc in the directions X and Z relative to the part in order to perform a set of grinding operations on the part. Electronic monitoring units are provided with interface means, normally a keyboard and video, for programming the units, i.e. for inserting a plurality of controls in the monitoring unit in order to construct coded instructions for controlling the movement of the disc and performing a plurality of elementary cycles for grinding the part; each elementary cycle is identified by a position of the disc in the direction Z and by the manner of approach and contact of the disc with the part.

US 5,608,641 shows a method for generating numerical control (NC) programs for machine tools from NC program segments representing elementary operations. The NC program segments are displayed, may be selectively retrieved and assembled to form the final NC program.

The object of the present invention is to construct an electronic processing unit for easy and rapid performance of the programming procedure.

The object is achieved by the present invention, which relates to a device for monitoring a grinding machine as described in claim 1.

The invention will now be illustrated with particular reference to the accompanying drawings in which:
- Fig. 1 is a diagram of a grinding machine operating with a monitoring device according to the present invention;
- Figs. 2a, 2b and 2c are detailed illustrations of various phases in the method of programming the monitoring device; and
- Figs. 3a, 3b, 3c, 3d and 3e illustrate video images for performance of phases of programming according to the present invention.

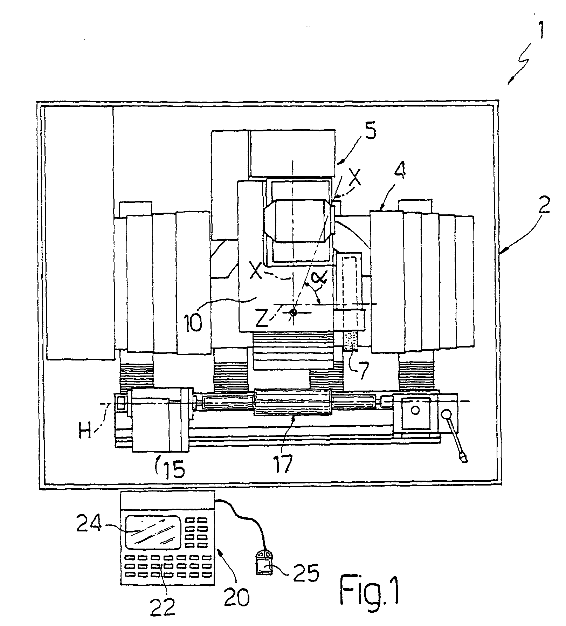

With particular reference to Fig. 1, the general reference 1 indicates a grinding machine (of known kind) in which a support structure 2 carries a rectilinear guide 4 along which a carriage 5 moves under the action of actuating means (not shown) and carries a grinding disc 7 movable through an angle under the action of drive means (not shown). More particularly the disc 7 is carried by a support structure 10 movable relative to the carriage 5 (under the action of actuators not shown) in a direction X at an angle to the direction Z in which the carriage 5 moves along the guide 4. The support structure 10 can also be adjusted at an angle around a vertical axis relative to the carriage 5 (under the action of actuators not shown) so as to vary the angle α between the direction X and the direction Z.

The support structure 2 also carries a retaining device 15 (of known kind) for a part 17 having substantially axial symmetry and disposed parallel to the rectilinear guide 4. The retaining device 15 is adapted to carry opposite ends of the part 17, so that the part 17 is disposed with its axis H parallel to the direction Z and at an angle to the direction X; the retaining device 15 is also adapted to rotate the part 17 through an angle.

The grinding machine 1 is monitored by an electronic control and monitoring unit 20 adapted to monitor the motion of the carriage 5 along the guide 4 and the movement of the retaining device 15 relative to the carriage 5, i.e. the movement of the disc 7 in the directions X and Z and the rotation of the support structure 10 for moving the disc towards or away from the part 17. The monitoring unit 20 is also adapted to monitor the rotation of the part 17 around its axis H and the angular speed of rotation of the disc 7.

According to the present invention, the electronic unit 20 is provided with a novel method of programming for constructing, selecting and implementing a plurality of machining programs; each program comprises coded instructions for performing a plurality of automatic operations for machining the part 17 by using the grinding disc 7 (also called a wheel hereinafter). The electronic unit 20 comprises a central processing unit and peripheral units including a keyboard 22, a video terminal 24 and a mouse 25.

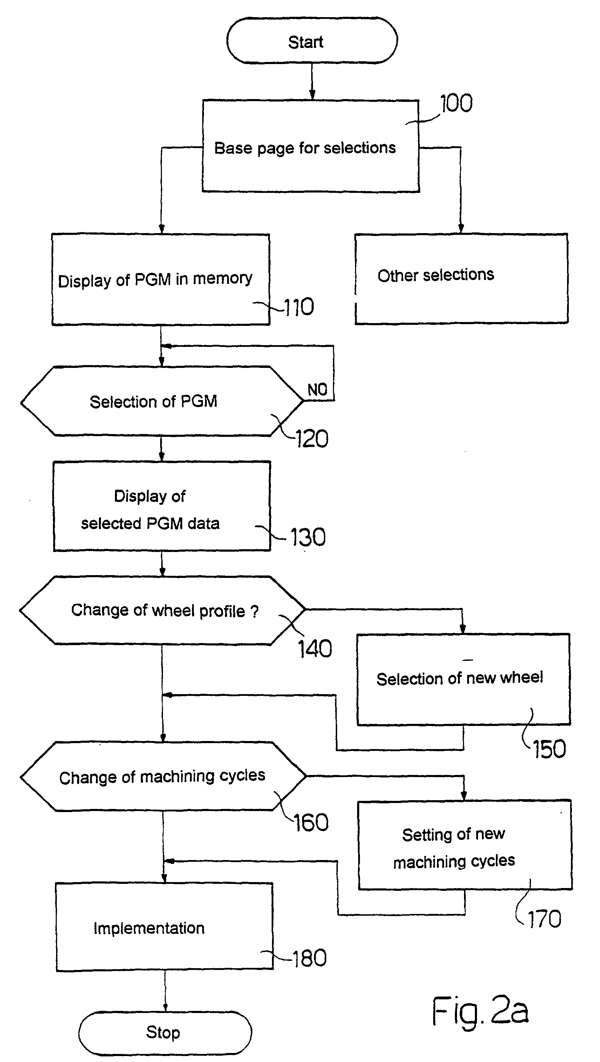

The operations performed by the electronic unit 20 according to the present invention are illustrated with particular reference to Fig. 2a. The following description relates to an embodiment in which a plurality of operations are performed in sequential manner, but of course all or some of the operations subsequently described can be performed simultaneously, i.e. in parallel, and/or the order in which the successively described operations are performed and successively activated can be different from that illustrated.

A starting block (START) is followed by a block 100 which displays on a video 24 a plurality of indications (in alphabetic or graphic form) of methods of operation which can be selected by the electronic unit 20. From among the various possible operating modes (omitted for simplicity) a selection can be made, e.g. by manual control via the keyboard 22 or mouse 25, of an operating or "programming" mode which can be used to construct a set of coded instructions for monitoring the machine 1 and performing a plurality of machining cycles on the part 17. In the following description, therefore, the word "program" will be used to mean the set of coded instructions enabling a plurality of elementary cycles to be performed in sequence; each elementary cycle comprises a set of grinding operations performed on a portion of the part 17. In each elementary cycle the disc 7 takes up a specific position relative to the part 17 in the direction Z.

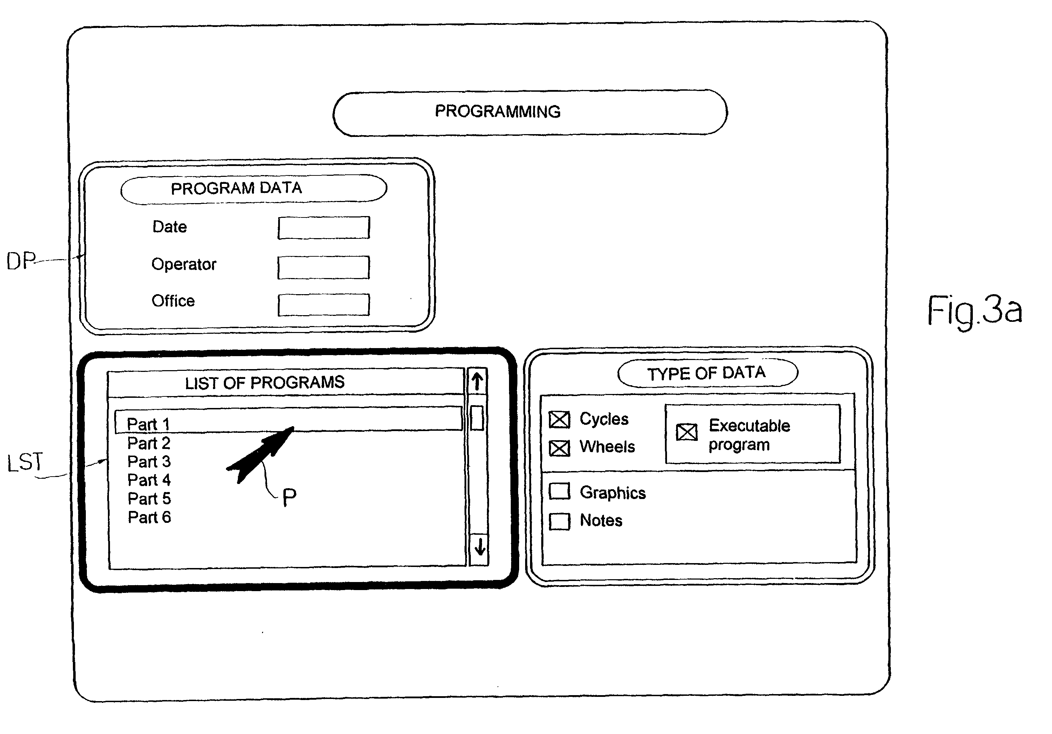

After the programming mode has been selected, a move is made from block 100 to a block 110 which introduces the programming mode and displays on video 24 a plurality of items to be supplied to the user in order to begin the programming operations. With particular reference to Fig. 3a, which illustrates an example of the display made by block 110, the video 24 shows a list LST of programs ready and present in the memory.

Block 110 is followed by block 120 which is ready for a command to select the programs displayed by the block 110; after the program has been selected by block 120 a move is made to a block 130 which displays some details of the selected program. The program can be selected by conventional graphic interfaces which are known and based e.g. on the WINDOWS convention, running through the list LST of programs, positioning the pointer P on the selected program and sending a selection command by actuating the mouse 25 or by keyboard.

The block 130 also displays a set of reference details DP of the selected program (e.g. date of compilation of the program, the operator who drew up the program and the office to which he belongs). The program of course includes all coded instructions which describe the elementary cycles previously described (CYCLES). The name of the program is then displayed, also noting the presence of a set of auxiliary data associated with the selected program and complementary therewith, these auxiliary data comprising all the physical and geometrical data characterising the grinding disc 11 (WHEELS).

Block 130 is followed by a block 140 which checks the presence of a manual control for adjusting the physical and geometrical data characterising the grinding disc; on receipt of such a command, a move is made from block 140 to a block 150 in which the physical and geometrical data characterising the disc 7 are adjusted (in a manner which is substantially known and therefore not described). From block 150 and block 140 a move is made to the next block 160, which is ready for a command to amend the existing program by varying the set of elementary machining cycles. On receipt of a command to amend the machining cycles, a move is made from block 160 to a block 170 (beginning of programming operations) which makes the said amendments, or otherwise a move is made to a block 180. Block 170 is in any case followed by block 180.

Block 180 implements the program for controlling the grinding machine 1, i.e. interprets the coded instructions of the program and translates them into electronic signals for physical monitoring of the actuators of machine 1. Block 180 can also stop the machining of the part (STOP), on receipt of a suitable command (manual or automatically generated on completion of the machining program).

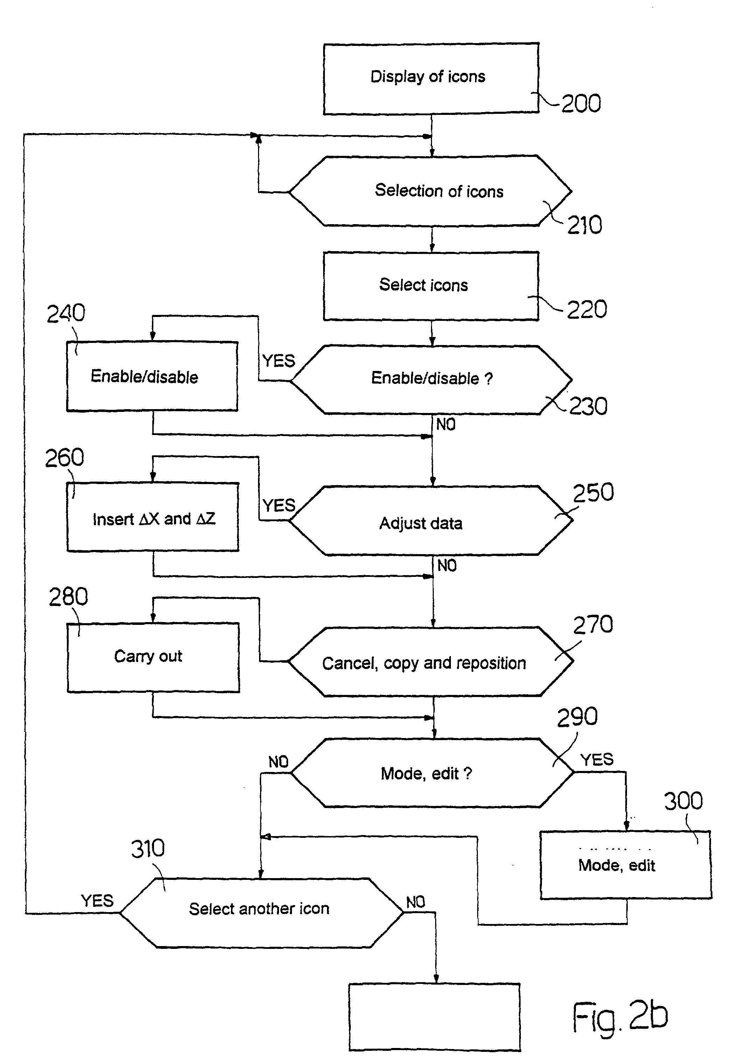

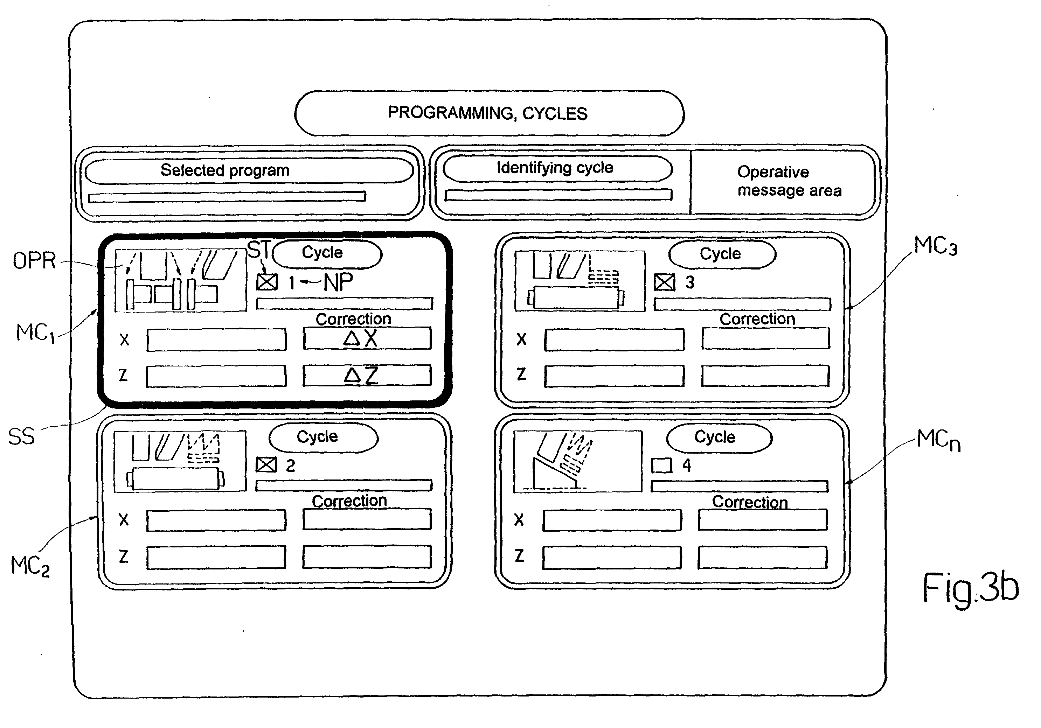

Details of block 170 will now be illustrated with reference to Figs. 2b and 3b.

The block 170 starts with a first block 200 which displays on the video a plurality of representation units or macro-icons MC1, MC2, MC3 ... MCn belonging to the previously selected program, each representation unit being associated with an elementary cycle of the machine 1.

More particularly each elementary representation unit comprises means for video display of a plurality of items associated with the said elementary cycle, including:
a) an index of advance NP representing the elementary cycle within the sequence of elementary cycles in the program - the executive block 180 is adapted to interpret data associated with the index of advance NP in order to perform the elementary cycle in a predetermined time sequence;
b) the bistable state ST of the elementary circuit. There are in fact two possible states, i.e. an **ACTIVE** state in which information relating to the elementary cycle is displayed on the video and is also acted upon in block 180 for physical performance of the displayed and stored operations in machine 1, and an **INACTIVATED** state in which the stored information relating to the elementary cycle is displayed on the video but is not put into effect in the block 180. This information may conveniently be represented by an area on the screen (e.g. a square) which takes two different configurations (e.g. a blank square or a crossed square) depending on its state;
c) the type of machining OPR associated with the elementary machining cycle and the manner of repositioning the disc 7 relative to the part 17 in order to carry out an elementary machining cycle. This information may be conveniently represented by an icon which pictorially describes the type of movement of disc 7 relative to part 17 and carried out in the said elementary cycle. Each icon is of course associated with a set of coded instructions which, when suitably decoded and translated in the block 180, co-operate in physical control of the actuators of machine 1 in order to carry out the said operations;
d) the position of the disc 7 in the directions X and Z for the associated elementary cycle. This information may conveniently be represented by tables in which the numerical values of X and Z are inserted. In this case also, the numerical information is coded and stored and subsequently used in block 180 for physically positioning the disc 7 in the directions X and Z;
e) values ΔX and ΔZ for adjusting the said positions X and Z. This information may conveniently be represented by tables in which the said numerical values ΔX and ΔZ are inserted.

The block 200 is followed by a block 210 which is disposed ready for a command (given by keyboard or mouse) for selecting one of the representation units MC displayed by block 200. On receipt of a selection command from block 210, a move is made to a block 220 which displays signs SS on a video (e.g. a bright-coloured frame surrounding the macro-icon) for marking the selected macro-icon. Block 220 also sets the selected macro-icon in a mode in which the associated data can be amended.

More particularly, block 220 is followed by a block 230 which checks the presence of a command to amend the state; on receipt of such a command (via keyboard or mouse) a move is made from block 230 to a block 240 which changes the state ST (ACTIVE/INACTIVATED) and is followed by a block 250. Block 230 is in any case followed by block 250.

Block 250 checks the presence of a command (by keyboard and/or mouse) for amending the adjustment values ΔX and ΔZ ; on receipt of this command, a move is made from block 250 to a block 260 in which the said adjustment values ΔX and ΔZ are introduced. Blocks 260 and 250 are in any case followed by a block 270. Block 270 checks for the presence of a command (given via keyboard and/or mouse) for elimination (CANCELLATION), storage (COPYING) or movement (REPOSITIONING) of the selected macro-icon in the set of existing icons belonging to the said program; on receipt of this command a move is made from block 270 to a block 280 in which the operation activated by the selected macro-icon is performed. For example a macro-icon can be cancelled and repositioned (REPOSITIONING) inside the group of icons in a position different from the initial position. In this way the advancing order of the macro-icons is modified, thus modifying the order in which the elementary program cycles are performed. A macro-icon may also be copied (COPIED) and the copy can be positioned inside the group of icons, thus generating a program containing an additional elementary cycle. Also, in the implementation block 180 the coded instructions associated with each elementary cycle (i.e. with each macro-icon) are performed in the order in which each macro-icon is numbered, resulting in a sequence of elementary machining cycles corresponding to the sequence of active macro-icons. In short, the block 180 examines the information associated with each macro-icon in order to control the physical repositioning of the grinding disc 7 in accordance with the data associated with the said macro-icon.

Blocks 270 and 280 are followed by a block 290 which checks for the presence of a command (via keyboard and/or mouse) to select a more precise programming mode (EDIT) for each elementary cycle, i.e. by a more detailed definition of the parameters associated with the selected macro-icon. On receipt of this command a move is made from block 290 to block 300 (described in detail hereinafter) in which the parameters of the selected macro-icon can be defined with greater precision. Blocks 300 and 290 are followed by a block 310 adapted to check whether it is required to select another macro-icon. If so, a return is made to block 210. Otherwise a move is made from block 170 and the program can be implemented and/or stored.

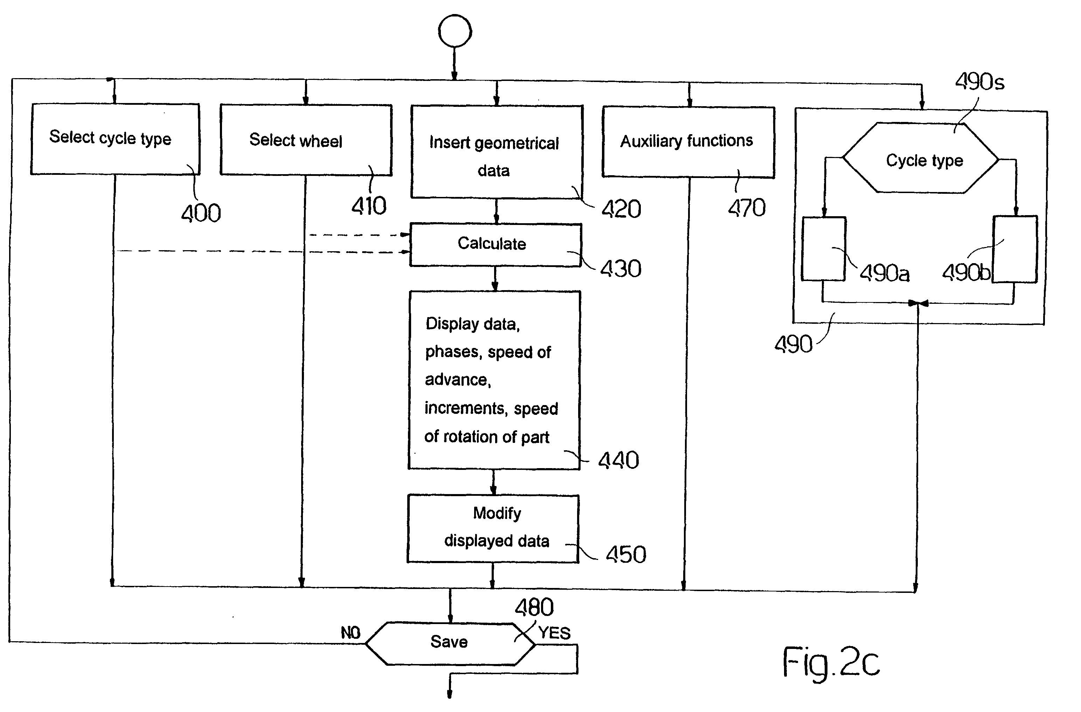

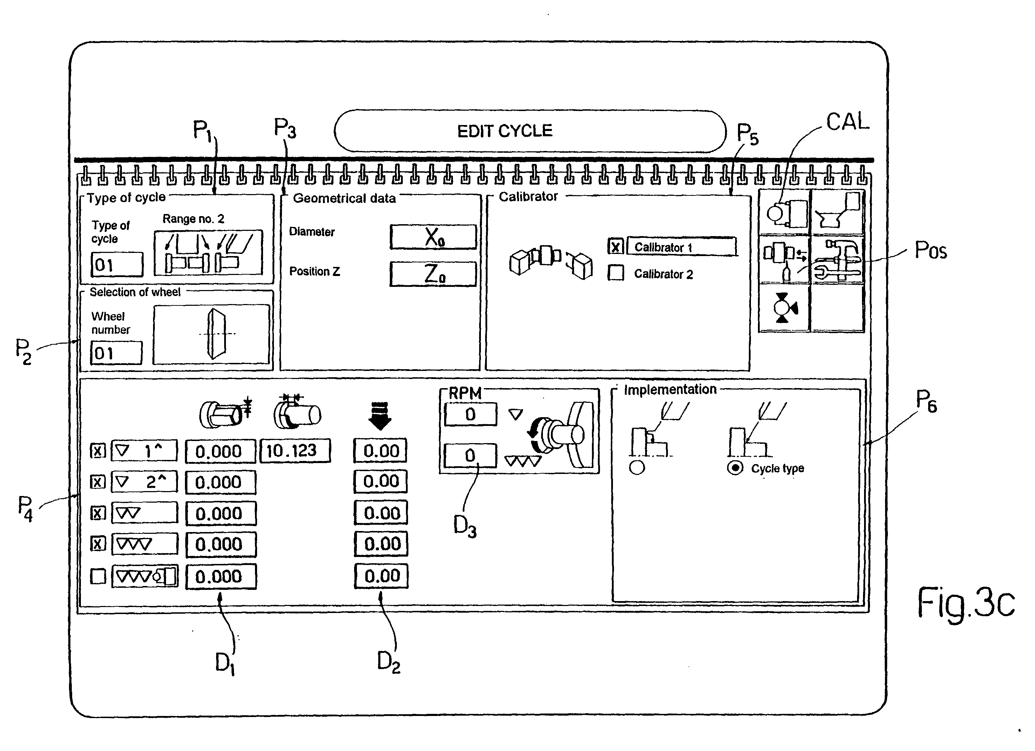

Block 300 will now be described with reference to Figs. 2c and 3c. In the following description, other operations will be described as occurring in parallel, but of course all or some of these operations described hereinafter can be performed in sequence.

More particularly, block 300 comprises a first block 400 which displays on a video a first portion of an image P1 (cycle type icon) which shows a pictorial image and a serial number (cycle type number) relating to the type of operation, i.e. the manner of movement towards or contact between the grinding disc 7 and the part 12, which is to be effected in the elementary cycle which is now being programmed. Each cycle type icon is of course associated with a set of digital data which, after suitable processing in block 180, enable the machine 1 to be physically monitored in order to perform the desired movements and operations as shown diagrammatically in the icon. The cycle type icon is selected from an icon data base, each icon being of course associated with a set of digital data for controlling the motion of the disc 7 in accordance with a respective mode of approach and contact.

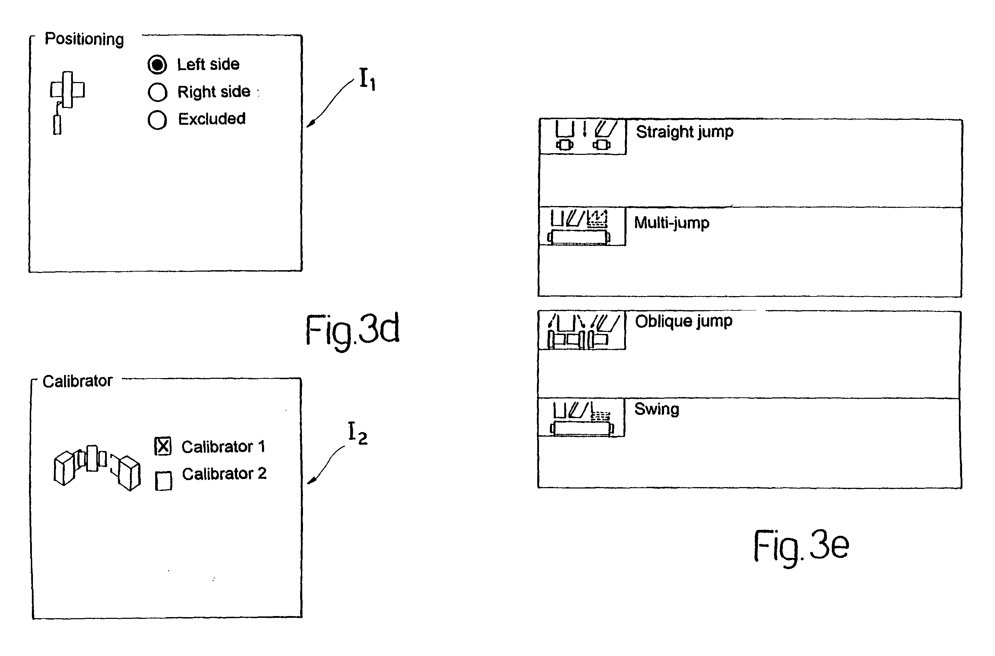

Fig. 3e, by way of non-limitative example, illustrates three possible icons associated with respective cycles, i.e.:
- a first icon relating to the machining cycle denoted by the conventional term "direct jump". In this cycle the movement of the disc 7 towards the part 17 is made in the direction X only.
- a second icon relating to the machining cycle denoted by the conventional term "oblique jump". In this cycle the movement of the disc 7 towards the part 17 is made in the directions X and Z, and
- a third icon relating to the machining cycle denoted by the conventional term "swinging". In this cycle the movement of disc 7 towards the part 17 is made in the directions X and Z and with synchronous oscillation of the disc.

The block 300 also comprises a block 410 which displays on the video a second portion of the image P2 (choice-of-wheel icon) which contains a pictorial image and a serial number (wheel number) relating to the type of wheel used in the elementary circuit which is now being programmed. Each choice-of-wheel icon is of course associated with a set of digital data which describe the physical and geometrical characteristics of the wheel and, after suitable processing in the block 180, are used for physical monitoring of the machine 1 when carrying out the desired movements and operations. The choice-of-wheel icon is selected from an icon data base, each icon being of course associated with a set of digital data for defining a specific disc profile 7.

The block 300 comprises a block 420 which displays on video a third image portion P3 (geometrical data area) for inserting a numerical value Xo (measured along X) and a numerical value Zo (measured along Z), where Xo and Zo are final positions (measured along X and Z), which are reached at the end of an elementary cycle.

The block 420 is followed by a block 430 whose input receives the data Xo and Zo inserted into the preceding block 430 together with data relating to the type of cycle selected by block 400 and the data relating to the type of wheel selected by block 410, and supplies these data to the input of a calculating unit (e.g. in the form of electronic tables) which, on the basis of the input data, outputs a first plurality of data D1 representing optimum values of increments of advance in the direction X to be obtained in each phase of grinding the part 17, a second plurality of data D2 representing optimum values of the speed of advance of disc 7 during each phase, and a third group of data D3 relating to the speed of rotation of the part 17 during each phase. As is known, as a result of contact between disc 7 and part 17, material is removed during each elementary cycle in a plurality of successive phases, each phase being characterised by an increment in the advance of the disc 7 relative to the part 17 and along X, by the relative speed of advance and by the speed in which the part 17 is set in rotation in each phase.

The block 430 is followed by a block 440 which controls the video display, in a fourth image portion P4, of the first plurality of data D1 (the advance in each phase), the second plurality of data D2 (the speed of advance of disc 7 in each phase) and the third plurality of data D3 (the speed of rotation of part 17 in each phase).

Block 440 is followed by a block 450 which is in readiness for any command to modify the first, second and third plurality of data D1, D2 and D3. The data D1, D2 and D3 can be modified by the usual procedure known in graphic interfaces, by selecting the video compartment containing the said data and inserting new numerical values via the keyboard. The first, the second and the third plurality of data are accordingly stored and used in block 180 for physical implementation of the repositioning of disc 7 during the successive machining phases in each elementary cycle and physical monitoring of the retaining device 15 for adjusting the speed of rotation of the part 17.

Block 300 also controls the display in portion P4 of an image (area RPM) showing a pictorial image associated with the compartment containing the data D3, which represent rotation of part 17 brought about by the retaining device 15.

Block 300 also comprises a block 470 (shown in detail hereinafter) for display, activation and performance of a plurality of auxiliary functions.

Blocks 400, 410, 450 and 470 are followed by a block 480 adapted to receive a command (SAVE) for storing the configuration obtained by use of the said blocks. After the command to store has been received, a move is made from block 300, or alternatively a return to blocks 400, 410, 420 and 470.

Some of the auxiliary functions controlled by block 470 will now be described. Block 470 controls the video display of a plurality of icons, each relating to an auxiliary programming function. For example an icon CAL relating to the presence of a calibrator can be displayed. As is known, some operations for grinding the part 17 are performed by using a diameter-measuring device (calibrator) provided with moving parts adapted to be disposed so that they abut the outer surface of the part 17 for grinding, in order to measure the diameter of the part.

After this icon has been activated (by the usual methods known in graphics, by placing the pointer on the icon and giving a command via mouse and/or keyboard), a fifth video portion P5 shows a diagrammatic image (icon I1 in Figs. 3c and 3d) of the part and the image of two calibrators abutting the part, and two selection compartments are provided for activation/inactivation of a calibrator and an auxiliary calibrator (if present). In the absence of an activation command, the elementary cycle will be prepared without calibration operations, and the block 180 will therefore perform the operations of monitoring the movement of disc 7 without directly knowing the diameter of the part, whereas in the presence of an activation command, the elementary cycle will be prepared on the basis of coded instructions which include calibration operations and the block 180 monitoring the motion of disc 7 will therefore also take account directly of the diameter of the part.

An icon POS relating to the presence of a positioner can also be displayed. As is known, some operations of grinding the part 17 are performed using an axial position measuring device comprising a movable arm adapted to be disposed against an annular shoulder of the part for grinding in order to detect the axial position of the part. As is known, owing to tolerances in positioning introduced by the support device 15, the axial position of the part sometimes has to be directly measured by an instrument (the positioner in this case) which detects the position in the Z direction of reference portions (shoulders) of the part.

After activation of this icon (activation made by the usual known methods in graphics, by disposing the pointer on the icon and giving a command via mouse) a fifth video portion P5 shows a diagrammatic image (icon I2 in Fig. 3d) of the part and the image of a positioner abutting the part, and at least one area of the said fifth portion is provided for positioning the cursor and the command via mouse to activate the positioner on the right or left side, or to activate/inactivate the positioner. In the absence of an activation command, the elementary cycle will be prepared on the basis of coded instructions which do not include the use of the positioner, and the block 180 will therefore perform the operations of monitoring the movement of disc 7 without directly knowing the axial position of the part, whereas in the presence of an activation command the elementary cycle will be prepared including the use of the positioner, and the block 180 monitoring the motion of disc 7 will therefore also take direct account of the axial position of the part.

A sixth video portion P6 can display graphic signs (block 490 parallel to block 460) relating to the manner of performance of the elementary machining cycle. More particularly, image portions are provided for selection of a first or a second kind of machining, on command via the mouse (block 490s). After selection of a first type of machining cycle, a block 490a is selected and generates coded instructions which, when processed by block 180, control machining of the part 17 in three phases:
- a first phase in which the disc 7 is moved along X and Z relative to the part;
- a second and successive phase in which the disc 7 is moved along Z relative to the part; and
- a third and last phase in which the disc 7 is moved along X relative to the part.

If a second type of machining cycle is selected, on the other hand, a block 490b is selected and generates coded instructions which, when processed by block 180, command machining of the part 17 in a single phase in which the disc 7 is simultaneously moved along X and Z relative to the part in order to carry out the grinding operations.

The advantages of the present invention are clear from the preceding, i.e. an extremely simple, flexible programming procedure is provided.

In practice, selection of a programming mode (block 100) is immediately followed by a state of "admittance" to the programming (blocks 110, 120, 130, 140 and 150) in which a program already in the memory can be selected, reference data associated with the program can be read, and data associated with the grinding disc 7 can be modified (blocks 140, 150). Exit from this pre-programming phase is via manual command (block 160) by the operator. This provides an entry to the actual programming mode (block 170) in which an existing program can be modified or a new program can be created. In the present invention, admittance to the programming mode comprises activation of a first programming level (block 200) in which a plurality of icons representing the elementary cycles of the program are immediately displayed in simple form. The operator therefore has an immediate perception of the time sequence of the elementary cycles making up the program and in each cycle he can immediately have access (including inspection and modification when required) to the data characterising the cycle, as basically defined by the type of icon associated with the elementary cycle and by the physical position X and Z associated with the cycle. The time sequence of cycles and the number and arrangement of cycles can easily be modified by the usual adjustment and amendment operations in conventional graphics, resulting in a novel sequence of elementary cycles. The program can therefore be modified by remaining at the first level of programming, i.e. using macro-icons already defined without the need for a detailed definition of all data associated with the macro-icon. However the operator may also change over to a second programming level (block 290) in which all data relating to the selected elementary cycle can be defined in great detail (blocks 400 - 490). However, definition of data by blocks 400 - 490 is not necessary when the macro-icons used for creation of the program have already been defined.

## Claims

1. A device for monitoring a grinding machine (1) in which a grinding head (10) carries a grinding disc (7) movable through an angle under the action of drive means and movable under the action of actuating means in at least a first direction (X) and a second rectilinear direction (Z) intersecting the first direction (X) in order to position the grinding disc (7) relative to a substantially axially symmetrical part (17) for subjecting to grinding operations; the part (17) being carried by support means (15) adapted to rotate the part through an angle; the monitoring device comprising an electronic unit (20) for controlling and monitoring the said grinding machine (1), comprising programming means for constructing a program for monitoring the said machine (1) and for performing a plurality of grinding operations, characterised in that the programming means comprise:
- first programming means (170) for activation (160) on receipt of a command to begin programming and adapted for programming at a first level during which an ordered sequence of representation units (MC) is displayed on display means (24); each representation unit (MC) being associated with a respective elementary cycle representing a set of grinding operations to be performed on the part (17); each representation unit (MC) being also associated with a respective set of coded instructions for control of the grinding machine by executive means (180) and physical performance of the said set of operations; a plurality of elementary cycles together defining the said program and each elementary cycle representing a set of operations to be performed on a portion of the said part;
the said programming means also comprising second programming means (300) for activation (290) on receipt of an end of programming command (290) and adapted for programming at a second level in which, for each selected (210) elementary representation unit (MC), a plurality of parameters associated with the said elementary cycle is displayed on the display means (24); the second programming means (300) enabling the said parameters to be displayed and modified.

2. A device according to claim 1, characterised in that the said first programming means (170) comprise means for construction and display of an index of advance (NP) representing the elementary cycle in the sequence of elementary cycles included in the said program; the executive means (180) being adapted to interpret data associated with the said index of advance (NP) in order to perform the said elementary cycle in a predetermined time sequence.

3. A device according to claim 1 or 2, characterised in that the said first programming means (170) comprise means for construction and display of an index of state (ST) representing a bistable state of the said elementary cycle; the bistable state comprising two states, i.e. an active state in which the information relating to the elementary cycle is displayed on the display means and can also be acted upon by the said executive means (180) for physical performance in the machine (1) of the operations represented by the said elementary representation unit, and an inactivated state in which the information relating to the elementary cycle is displayed on the said display means and is ignored by the said executive means (180).

4. A device according to any of the preceding claims, characterised in that the said first programming means (170) comprise means for display of graphic icon characters (OPR) for identifying the type of machining associated with the elementary machining cycle and the methods of repositioning the disc (7) relative to the part (17) when implementing the said elementary cycle; each icon (OPR) being associated with a set of coded instructions which, when decoded and translated by the said executive means (180), co-operate in physically controlling the said actuators of the machine (1) in order to move the said disc (7) and perform the said operations.

5. A device according to any of the preceding claims, characterised in that the said first programming means (170) comprise means for displaying numerical data which, for each elementary cycle, identify the position of the said disc (7) in the said first and second direction (X, Z); the said first programming means (170) being also adapted to convert the said numerical identifying data into instructions for the executive means (180) in order to position the said disc (7).

6. A device according to claim 5, characterised in that the said first programming means (170) comprise means for modifying the said numerical data for identifying the position of the said disc (7) in the said first and second direction (X, Z).

7. A device according to any of the preceding claims, characterised in that the said first programming means comprise editing means (270) for performing at least one of the following functions:
- cancelling at least one of the said representation units (MC) and the set of instructions associated with the representation unit (MC);
- copying at least one of the representation units (MC) and the set of instructions associated with the representation unit (MC) and inserting the said unit (MC) at any point in the sequence of the set of said units;
- repositioning at least one representation unit (MC) and the set of instructions associated with the representation unit (MC) and repositioning the repositioned cancellation unit inside the said set of representation units.

8. A device according to any of the preceding claims, characterised in that the said second programming means comprise means for display and selection (440) of graphic icon characters (OPR) for identifying the type of machining associated with the elementary machining cycle and the methods of repositioning the disc (7) relative to the part (17) in the performance of the elementary cycle; each icon (OPR) being associated with a set of coded instructions which, when decoded and translated by the said executive means (180), co-operate in physical control of the actuators of the machine (1) in order to perform the set of motions.

9. A device according to any of the preceding claims, characterised in that the said second programming means comprise means for selecting (410) graphic icon characters for identifying the physical and geometrical parameters associated with the disc used in each elementary machining cycle; each icon being associated with a set of coded instructions which, when decoded and translated by the said executive means (180), transfer the said physical and geometrical data to the said electronic monitoring unit.

10. A device according to any of the preceding claims, characterised in that the said second programming means (300) comprise setting means (420) for introducing a first numerical value (Xo) representing a position in the said first direction (X) and a second numerical value (Zo) representing a position in the said second direction (Z); the said first numerical value (Xo) and the said second numerical value (Zo) representing positions reached at the end of an elementary cycle.

11. A device according to claim 10, characterised in that the said setting means (420) are associated with calculating means (430) which at their input receive the said first and second numerical values (Xo, Zo) together with data representing the selected elementary cycle; in response to the input data, the said setting means (420) output a first plurality (D1) of data representing estimated optimum values of advance in the said first direction (X); each estimated optimum value of advance being relative to a phase of grinding the said part (17) in which the said disc (7) makes contact with the said part (17) in order to remove material; each elementary cycle comprising a plurality of successive phases; the said calculating means (430) also outputting a second plurality of second data (D2); each second item (D2) representing an optimum value of the speed of advance of the said disc (7) during a respective phase; the calculating means (430) also outputting a third plurality of third data (D3); each third item (D3) representing an optimum value of the speed of rotation of the said part (17) during a respective phase.

12. A device according to claim 11, characterised in that the said calculating means (430) are associated with adjustment means (450) for manual modification, if required, of the calculated numerical values relating to the said first, second and third plurality of data (D1, D2, D3).

## Patentansprüche

1. Vorrichtung zum Überwachen einer Schleifmaschine (1), bei der ein Schleifkopf (10) eine Schleifscheibe (7) trägt, die über einen Winkel unter der Wirkung von Antriebsmitteln bewegbar ist und die unter der Wirkung von Betätigungsmitteln in zumindest einer ersten Richtung (X) und einer zweiten geradlinigen Richtung (Z) bewegbar ist, welche die erste Richtung (X) schneidet, um die Schleifscheibe (7) relativ zu einem im wesentlichen achssymmetrischen Teil (17), das für Schleifvorgänge vorgesehen ist, zu positionieren, wobei das Teil (17) durch Haltemittel (15) getragen wird, die in der Lage sind, das Teil über einen Winkel zu drehen, wobei die Überwachungsvorrichtung eine elektronische Einheit (20) zum Steuern und Überwachen der Schleifmaschine (1) ist, die Programmiermittel zum Erzeugen eines Programms für das Überwachen der Maschine (1) und für das Ausführen von mehreren Schleifvorgängen enthält,
**dadurch gekennzeichnet,** daß die Programmiermittel enthalten:
- erste Programmiermittel (170), um bei Empfang eines Befehls, das Programmieren zu beginnen, aktiviert zu werden (160) und um das Programmieren in einem ersten Level auszuführen, während dem eine geordnete Folge von Darstellungseinheiten (MC) auf Anzeigemitteln (24) angezeigt wird, wobei jede Darstellungseinheit (MC) zu einem entsprechenden Elementarzyklus gehört, der einen Satz an Schleifvorgängen repräsentiert, die an dem Teil (17) auszuführen sind, wobei zu jeder Darstellungseinheit (MC) darüber hinaus ein entsprechender Satz an codierten Befehlen zum Steuern der Schleifmaschine durch Ausführmittel (180) und der physischen Ausführung des Satzes an Vorgängen gehört; wobei mehrere Elementarzyklen zusammen das Programm definieren und jeder Elementarzyklus einen Satz an Vorgängen repräsentiert, die an einem Abschnitt des Teiles auszuführen sind,
wobei die Programmiermittel darüber hinaus zweite Programmiermittel (300) enthalten, um bei Empfang des Programmierendebefehls (290) aktiviert zu werden (290) und um auf einem zweiten Level zu programmieren, in dem für jede ausgewählte (210) Elementardarstellungseinheit (MC) mehrere Parameter, die zu dem Elementarzyklus gehören, auf den Anzeigemitteln (24) angezeigt werden, wobei die zweiten Programmiermittel (300) es ermöglichen, diese Parameter anzuzeigen und zu modifizieren.

2. Vorrichtung nach Anspruch 1,
**dadurch gekennzeichnet,** daß die ersten Programmiermittel (170) Mittel zum Erzeugen und Anzeigen eines Vorrückindexes (NP) enthalten, der den Elementarzyklus in der Folge von Elementarzyklen kennzeichnet, die in dem Programm enthalten sind, wobei die Ausführmittel (180) in der Lage sind, Daten zu interpretieren, die zu dem Vorrückindeces (NP) gehören, um den Elementarzyklus in einer vorbestimmten Zeitfolge auszuführen.

3. Vorrichtung nach Anspruch 1 oder 2,
**dadurch gekennzeichnet,** daß die ersten Programmiermittel (170) Mittel zum Erzeugen und Anzeigen eines Zustandsindeces (ST) enthalten, welcher einen bistabilen Zustand des Elementarzyklus kennzeichnet, wobei der bistabile Zustand zwei Zustände enthält, d.h. einen aktiven Zustand, bei dem die Informationen, die den Elementarzyklus betreffen, auf den Anzeigemitteln angezeigt werden und darüber hinaus durch die Ausführmittel (180) für die physische Ausführung der Vorgänge in der Maschine (1) wirken können, die durch die Elementardarstellungseinheit gekennzeichnet sind, und einen inaktivierten Zustand, bei dem die Informationen, die den Elementarzyklus betreffen, auf dem Anzeigemittel angezeigt werden und durch die Ausführmittel (180) ignoriert werden.

4. Vorrichtung nach einem der vorstehenden Ansprüche,
**dadurch gekennzeichnet,** daß die ersten Programmiermittel (170) Mittel zum Anzeigen von graphischen Iconzeichen (OPR) zur Identifikation der Bearbeitungsart, die zu dem Elementarbearbeitungszyklus gehört, und von Verfahren zum Neupositionieren der Scheibe 7 relativ zu dem Teil (17) enthalten, wenn der Elementarzyklus implementiert wird, wobei zu jedem Icon (OPR) ein Satz an codierten Befehlen gehört, die, wenn decodiert und durch die Ausführmittel (180) übersetzt worden sind, bei der physischen Steuerung der Betätigungseinrichtungen der Maschine (1) kooperieren, um die Scheibe (7) zu bewegen und den Vorgang auszuführen.

5. Vorrichtung nach einem der vorstehenden Ansprüche,
**dadurch gekennzeichnet,** daß die ersten Programmiermittel (170) Mittel zum Anzeigen numerischer Daten enthalten, die für jeden Elementarzyklus die Position der Scheibe (7) in der ersten und der zweiten Richtung (X, Z) identifizieren, wobei die ersten Programmiermittel (170) darüber hinaus in der Lage sind, die numerischen Identifikationsdaten in Befehle für die Ausführmittel (180) zu konvertieren, um die Scheibe (7) zu positionieren.

6. Vorrichtung nach Anspruch 5,
**dadurch gekennzeichnet,** daß die ersten Programmiermittel (170) Mittel zum Modifizieren der numerischen Daten für die Identifikation der Position der Scheibe (7) in der ersten und der zweiten Richtung (X, Z) enthalten.

7. Vorrichtung nach einem der vorstehenden Ansprüche,
**dadurch gekennzeichnet,** daß die ersten Programmiermittel Editiermittel (270) zum Ausführen zumindest einer der folgenden Funktionen enthalten:
- Löschen von zumindest einem der Darstellungseinheiten (MC) und des Satzes an Befehlen, die zu der Darstellungseinheit (MC) gehören,
- Kopieren von zumindest einer der Darstellungseinheiten (MC) sowie des Satzes an Befehlen, die zu der Darstellungseinheit (MC) gehören, und Einsetzen dieser Einheit (MC) an jedem Punkt in der Folge des Satzes an Einheiten,
- Neupositionieren von zumindest einer Darstellungseinheit (MC) sowie des Satzes an Befehlen, die zu der Darstellungseinheit (MC) gehören, und Neupositionieren der neupositionierten, gelöschten Einheit innerhalb des Satzes an Darstellungseinheiten.

8. Vorrichtung nach einem der vorstehenden Ansprüche,
**dadurch gekennzeichnet,** daß die zweiten Programmiermittel Mittel zum Anzeigen und Auswählen (440) von graphischen Iconzeichen (OPR) zum Identifizieren der Bearbeitungsart, die zu dem Elementarbearbeitungszyklus gehört, und von Verfahren zum Neupositionieren der Scheibe (7) relativ zu dem Teil (17) beim Ausführen des Elementarzyklus enthalten, wobei zu jedem Icon (OPR) ein Satz an codierten Befehlen gehört, welche, wenn decodiert und durch die Ausführmittel (180) übersetzt worden sind, bei der physischen Steuerung der Betätigungseinrichtungen der Maschine (1) zusammenwirken, um den Bewegungssatz auszuführen.

9. Vorrichtung nach einem der vorstehenden Ansprüche,
**dadurch gekennzeichnet,** daß die zweiten Programmiermittel Mittel zum Auswählen (410) von graphischen Iconzeichen zum Identifizieren der physikalischen und geometrischen Parameter enthalten, die zu der Scheibe gehören, welche bei jedem Elementarbearbeitungszyklus verwendet wird, wobei zu jedem Icon ein Satz an codierten Befehlen gehört, die, wenn decodiert und durch die Ausführmittel (180) übersetzt worden sind, die physikalischen und geometrischen Daten zu der elektronischen Überwachungseinheit übertragen.

10. Vorrichtung nach einem der vorstehenden Ansprüche,
**dadurch gekennzeichnet,** daß die zweiten Programmiermittel (300) Einstellmittel (420) zum Einführen eines ersten numerischen Wertes (Xo), der eine Position in der ersten Richtung (X) repräsentiert, und eines zweiten numerischen Wertes (Zo) enthalten, der eine Position in der zweiten Richtung (Z) repräsentiert, wobei der erste numerische Wert (Xo) und der zweite numerische Wert (Zo) die Positionen repräsentieren, die am Ende eines Elementarzyklus erreicht werden.

11. Vorrichtung nach Anspruch 10,
**dadurch gekennzeichnet,** daß zu den Einstellmitteln (420) Berechnungsmittel (430) gehören, welche an ihrem Eingang die ersten und zweiten numerischen Werte (Xo, Zo) zusammen mit Daten, die den ausgewählten Elementarzyklus repräsentieren, empfangen, wobei in Erwiderung auf die Eingangsdaten die Einstellmittel (420) eine erste Reihe (D1) von Daten ausgeben, die die erwarteten optimalen Werte des Vorrückens in die erste Richtung (X) repräsentieren, wobei jeder abgeschätzte optimale Vorrückwert auf eine Phase des Schleifens des Teiles (17) bezogen ist, bei der die Scheibe (7) das Teil (17) berührt, um däs Material zu entfernen, wobei jeder Elementarzyklus mehrere aufeinanderfolgende Phasen enthält, wobei die Berechnungsmittel (430) darüber hinaus eine zweite Reihe von zweiten Daten (D2) ausgeben, wobei jeder zweite Datensatz (D2) einen optimalen Wert für die Vorrückgeschwindigkeit der Scheibe (7) während einer entsprechenden Phase repräsentiert, wobei die Berechnungsmittel (430) eine dritte Reihe von dritten Daten (D3) ausgeben, wobei jeder dritte Datensatz (D3) einen optimalen Wert der Drehzahl des Teiles (17) während einer entsprechenden Phase repräsentiert.

12. Vorrichtung nach Anspruch 11,
**dadurch gekennzeichnet,** daß zu den Berechnungsmitteln (430) Einstellmittel (450) für die manuelle Modifikation, falls erforderlich, der berechneten numerischen Werte gehören, die zu der ersten, zweiten und dritten Reihe von Daten (D1, D2, D3) gehören.

## Revendications

1. Dispositif de contrôle d'une machine de meulage (1) dans lequel une tête de meulage (10) porte un disque de meulage (7) qui peut se déplacer sur un certain angle, sous l'action de moyens d'entraînement et qui peut se déplacer sous l'action de moyens actionneurs dans au moins une première direction (X) et une deuxième direction rectiligne (Z) qui coupe la première direction (X) afin de positionner le disque de meulage (7) par rapport à une pièce (17) sensiblement symétrique au plan axial pour la soumettre à des opérations de meulage ; la pièce (17) étant portée par des moyens de support (15) adaptés pour faire tourner la pièce suivant un angle ; le dispositif de contrôle comportant une unité électronique (20) permettant de commander et de contrôler ladite machine de meulage (1), comprenant des moyens de programmation permettant de construire un programme pour contrôler ladite machine (1) et pour effectuer une pluralité d'opérations de meulage, caractérisé en ce que les moyens de programmation comprennent :
- un premier moyen de programmation (170) pour l'activation (160) à réception d'une commande du départ de la programmation, et prévu pour programmer à un premier niveau au cours duquel une séquence ordonnée d'unités de représentation (MC) s'affiche sur un moyen d'affichage (24) ; chaque unité de représentation (MC) étant associée à un cycle élémentaire respectif représentant un ensemble d'opérations de meulage à effectuer sur la pièce (17) ; chaque unité de représentation (MC) étant également associée à un ensemble respectif d'instructions codées pour la commande de la machine de meulage grâce aux moyens d'exécution (180) et la réalisation physique dudit ensemble d'opérations ; une pluralité de cycles élémentaires définissant ensemble ledit programme et chaque cycle élémentaire représentant un ensemble d'opérations à effectuer sur une partie de ladite pièce ;
ledit moyen de programmation comprenant également un deuxième moyen de programmation (300) pour activation (290) à réception d'une commande de fin de programmation (290), et prévu pour programmer à un deuxième niveau dans lequel, pour chaque unité de représentation élémentaire (MC) sélectionnée (210), une pluralité de paramètres associés audit cycle élémentaire est affichée sur le moyen d'affichage (24) ; le deuxième moyen de programmation (300) permettant auxdits paramètres de s'afficher et d'être modifiés.

2. Dispositif selon la revendication 1, caractérisé en ce que ledit premier moyen de programmation (170) comprend un moyen de construction et d'affichage d'un indice d'avance (NP) représentant le cycle élémentaire dans la séquence de cycles élémentaires inclus dans ledit programme ; le moyen d'exécution (180) étant conçu pour interpréter les données associées audit indice d'avance (NP) afin d'effectuer ledit cycle élémentaire dans une séquence temporelle prédéterminée.

3. Dispositif selon la revendication 1 ou 2, caractérisé en ce que ledit premier moyen de programmation (170) comprend un moyen de construction et d'affichage d'un indice d'état (ST) représentant un état bistable dudit cycle élémentaire ; l'état bistable comprenant deux états, à savoir un état actif dans lequel les informations relatives au cycle élémentaire sont affichées sur le moyen d'affichage et sur lesquelles on peut également agir grâce audit moyen d'exécution (180) pour la réalisation physique dans la machine (1) des opérations représentées par ladite unité de représentation élémentaire, et un état désactivé dans lequel les informations relatives au cycle élémentaire sont affichées sur ledit moyen d'affichage et sont ignorées par ledit moyen d'exécution (180).

4. Dispositif selon l'une quelconque des revendications précédentes, caractérisé en ce que le premier moyen de programmation (170) comprend un moyen d'affichage dès caractères graphiques d'icônes (OPR) pour identifier le type d'usinage associé au cycle élémentaire d'usinage et les procédés de repositionnement du disque (7) par rapport à la pièce (17) lorsque ledit cycle élémentaire est mis en oeuvre ; chaque icône (OPR) étant associée à un ensemble d'instructions codées qui, lorsqu'elles sont décodées et traduites par ledit moyen d'exécution (180) coopèrent pour la commande physique desdits actionneurs de la machine (1) afin de déplacer ledit disque (7) et d'effectuer lesdites opérations.

5. Dispositif selon l'une quelconque des revendications précédentes, caractérisé en ce que ledit premier moyen de programmation (170) comprend un moyen pour afficher des données numériques qui, pour chaque cycle élémentaire, identifient la position dudit disque (7) dans lesdites première et deuxième directions (X, Z) ; ledit premier moyen de programmation (170) étant également prévu pour convertir lesdites données numériques d'identification en instructions pour le moyen d'exécution (180) afin de positionner ledit disque (7).

6. Dispositif selon la revendication 5, caractérisé en ce que ledit premier moyen de programmation (170) comprend un moyen pour modifier lesdites données numériques d'identification de la position dudit disque (7) dans lesdites première et deuxième directions (X, Z).

7. Dispositif selon l'une quelconque des revendications précédentes, caractérisé en ce que le premier moyen de programmation comprend un moyen d'édition (270) pour effectuer au moins l'une des fonctions suivantes :
- annulation d'au moins l'une desdites unités de représentation (MC) et de l'ensemble des instructions associées à l'unité de représentation (MC) ;
- copie d'au moins l'une desdites unités de représentation (MC) et de l'ensemble des instructions associées à l'unité de représentation (MC), et insertion de ladite unité (MC) en un point quelconque de la séquence de l'ensemble desdites unités ;
- repositionnement d'au moins l'une desdites unités de représentation (MC) et de l'ensemble des instructions associées à l'unité de représentation (MC), et repositionnement de l'unité d'annulation repositionnée à l'intérieur dudit ensemble d'unités de représentation.

8. Dispositif selon l'une quelconque des revendications précédentes, caractérisé en ce que ledit deuxième moyen de programmation comprend un moyen pour afficher et sélectionner (440) des caractères graphiques d'icône (OPR) permettant d'identifier le type d'usinage associé au cycle élémentaire d'usinage et les procédés de repositionnement du disque (7) par rapport à la pièce (17) lors de l'exécution du cycle élémentaire ; chaque icône (OPR) étant associée à un ensemble d'instructions codées qui, lorsqu'elles sont décodées et traduites par ledit moyen d'exécution (180), coopèrent dans la commande physique desdits actionneurs de la machine (1) afin d'effectuer l'ensemble des déplacements.

9. Dispositif selon l'une quelconque des revendications précédentes, caractérisé en ce que ledit deuxième moyen de programmation comprend un moyen pour sélectionner (410) des caractères graphiques d'icône (OPR) permettant d'identifier les paramètres géométriques et physiques associés au disque utilisé dans chaque cycle élémentaire d'usinage ; chaque icône étant associée à un ensemble d'instructions codées qui, lorsqu'elles sont décodées et traduites par ledit moyen d'exécution (180), transfèrent lesdites données physiques et géométriques à ladite unité de contrôle électronique.

10. Dispositif selon l'une quelconque des revendications précédentes, caractérisé en ce que ledit deuxième moyen de programmation (300) comprend des moyens de réglage (420) pour introduire une première valeur numérique (Xo) représentant une position dans ladite première direction (X) et une deuxième valeur numérique (Zo) représentant une position dans ladite deuxième direction (Z) ; ladite première valeur numérique (Xo) et ladite deuxième valeur numérique (Zo) représentant des positions atteintes à la fin d'un cycle élémentaire.

11. Dispositif selon la revendication 10, caractérisé en ce que lesdits moyens de réglage (420) sont associés à des moyens de calcul (430) qui, à leur entrée, reçoivent lesdites première et deuxième valeurs numériques (Xo, Zo) ensemble avec des données représentant le cycle élémentaire sélectionné ; en réponse aux données entrées, lesdits moyens de réglage (420) délivrent une première pluralité (D1) de données représentant des valeurs optimales estimées d'avance dans ladite première direction (X) ; chaque valeur optimale estimée d'avance se rapportant à une phase de meulage de ladite pièce (17) au cours de laquelle ledit disque (7) entre en contact avec ladite pièce (17) afin d'enlever de la matière ; chaque cycle élémentaire comprenant une pluralité de phases successives ; lesdits moyens de calcul (430) délivrant également une deuxième pluralité de deuxièmes données (D2) ; chaque deuxième jeu (D2) représentant une valeur optimale de la vitesse d'avance dudit disque (7) au cours d'une phase respective ; les moyens de calcul (430) délivrant également une troisième pluralité de troisièmes données. (D3) ; chaque troisième jeu (D3) représentant une valeur optimale de la vitesse de rotation de ladite pièce (17) au cours d'une phase respective.

12. Dispositif selon la revendication 11, caractérisé en ce que lesdits moyens de calcul (430) sont associés à des moyens d'ajustement (450) permettant une modification manuelle, si nécessaire, des valeurs numériques calculées concernant lesdites première, deuxième et troisième pluralités de données (D1, D2, D3).
